# EUROPÄISCHE PATENTSCHRIFT

(11) **EP 3 024 568 B1**
(45) Veröffentlichungstag und Bekanntmachung des Hinweises auf die Patenterteilung: **16.08.2017**
(21) Anmeldenummer: 14728965.6
(22) Anmeldetag: 06.06.2014
(51) Int. Cl.: B01J 16/00, B01J 19/00, B01J 19/24, C01B 3/22

(54) **REAKTOR ZUR FREISETZUNG VON WASSERSTOFF AUS EINER FLÜSSIGEN VERBINDUNG**
REACTOR FOR RELEASE OF HYDROGEN FROM A LIQUID COMPOUND
RÉACTEUR POUR LA LIBÉRATION DE L'HYDROGÈNE D'UN COMPOSÉ LIQUIDE PORTEUR D'HYDROGÈNE

(30) Priorität: 22.07.2013 DE 102013214314
(43) Veröffentlichungstag der Anmeldung: 01.06.2016
(73) Patentinhaber: Bayerische Motoren Werke Aktiengesellschaft, 80809 München (DE)
(72) Erfinder: EYPASCH, Martin, 80538 München (DE); ZENNER, Michael, 80993 Muenchen (DE); PETERS, Willi, 90156 Erlangen (DE); WASSERSCHEID, Peter, 91054 Erlangen (DE)
(86) Internationale Anmeldenummer: PCT/EP2014/061839
(87) Internationale Veröffentlichungsnummer: WO 2015/010821

(56) Entgegenhaltungen:
- DE-A1-102010 038 491
- DE-A1-102011 079 858

## Beschreibung

Die Erfindung betrifft einen Reaktor zur Freisetzung von Wasserstoff aus flüssigen Verbindungen nach dem Oberbegriff des ersten Anspruchs und ein Verfahren zur Kraftstoff- oder Energieversorgung eines Verbrauschers mittels des Reaktors.

Heute aktuelle Szenarien zur Energiebereitstellung aus regenerativen Quellen im großen Maßstab, zum Beispiel Windparks in der Nordsee oder Desertec erfordern als wesentliche technische Voraussetzung geeignete Wege, um große Energiemengen möglichst verlustfrei speichern und transportieren zu können. Nur so lassen sich saisonale Schwankungen in der Erzeugung ausgleichen, nur so kann ein effizienter Transport der Nutzenergie über große Distanzen realisiert werden.

Ein bevorzugter Ansatz zur technischen Realisierung eines Energietransport- und Energiespeichersystems ist die Beladung eines energiearmen Stoffes A mit Wasserstoff unter Bildung eines energiereichen Stoffes B, wobei der dabei benötigte Wasserstoff aus einer Elektrolyse von Wasser mit Hilfe von bevorzugt regenerativ erzeugter elektrischer Energie bereit gestellt wird. Dieser energetische Beladungsvorgang erfolgt nach dem Stand der Technik typischerweise durch eine katalytische Hydrierreaktion unter Druck. Die energetische Entladung des Stoffes B erfolgt durch katalytische Dehydierung bei niedrigen Drücken und hohen Temperaturen. Der dabei wieder freigesetzte Wasserstoff kann zum Beispiel in einer Brennstoffzelle oder in einem Verbrennungsmotor energetisch genutzt werden. Erfolgt die Wasserstofffreisetzung an Bord eines Fahrzeugs, kann der dabei bereit gestellte Wasserstoff direkt zum Betrieb des Fahrzeugs genutzt werden. Dem Stand der Technik bekannte Beispiele umfassen die Energiespeicherung in Form von CH₄, NH₃ oder Methanol. Bei der Wasserstoffentladung dieser Verbindungen entstehen die gasförmigen Stoffe CO₂ - im Falle von Methan und Methanol - bzw. Stickstoff - im Falle von NH₃.

Ein alternatives, bekanntes Konzept, bei dem die energiearme Form A eine Flüssigkeit darstellt und folglich bei der energetischen Entladung erneut eine Flüssigkeit erhalten wird, beschreibt die DE 10 2008 034 221 A1. Die energiearme Form A kann in diesem Fall als Flüssigkeit gelagert und transportiert werden, um zu einer energiereichen Zeit und an einem energiereichen Ort erneut mit Wasserstoff beladen zu werden. Solche Systeme werden als "Liquid Organic Hydrogen Carriers (LOHCs)" bezeichnet. Beispiele solcher LOHCs werden in der Patentanmeldung EP 1 475 349 A2 offenbart. Bevorzugt handelt es sich bei den dem Stand der Technik bekannten LOHC-Systemen um Stoffpaare, bei denen der energiearme Stoff A eine hochsiedende, funktionalisierte, aromatische Verbindung darstellt, die im energetischen Beladungsvorgang hydriert wird. Reaktionssysteme zur katalytischen Wasserstofffreisetzung aus flüssigen Energiespeichermolekülen bestehen nach dem Stand der Technik aus Festbettreaktoren oder Slurry-Phasenreaktoren. In beiden genannten Reaktionssystemen bereitet das effiziente Einbringen von Wärme in den Reaktor Schwierigkeiten, da die Wärme über relativ große Distanzen von schlecht Wärme-leitenden Medien an den Reaktionsort transportiert werden muss. Außerdem werden die beiden genannten Reaktionssysteme durch die große, bei der dehydrierenden Entladung gebildete Wasserstoff-Gasmenge in ihrer Effizienz stark beeinträchtigt. In den, dem Stand der Technik bekannten Festbett- oder Slurry-Phasen-Reaktoren werden bei dieser Reaktion die katalytisch aktiven Oberflächen "freigeblasen", das heißt der Kontakt der zu entladenden Flüssigkeit mit der katalytischen Oberfläche wird durch bereits gebildetes Gas stark behindert. Dadurch ist die Geschwindigkeit der Wasserstofffreisetzung stark verlangsamt, was eine größere Freisetzungsapparatur für eine vorgegebene Leistung erfordert. DE 10 2011 079 858 beschreibt einen Reaktor zur Freisetzung von Wasserstoff aus einer Wasserstoff tragenden, flüssigen Verbindung, mit einem Reaktorgefäß, das einen Körper enthält, wobei dieser eine metallische Trägerstruktur besitzt, auf die eine feste, hochporöse Beschichtung aufgebracht ist, die katalytisch wirkende Substanzen für die Freisetzung von Wasserstoff aus flüssigen, Wasserstoff tragenden Verbindungen enthält.

Aufgabe der vorliegenden Erfindung ist es, einen Reaktor zur Freisetzung von Wasserstoff bereitzustellen, durch den die vorstehenden Nachteile des Standes der Technik überwunden werden. Außerdem ein Verfahren zur Versorgung eines Verbrauchers mit Wasserstoff durch den Betrieb des Reaktors.

Die Aufgabe der Erfindung wird durch die Merkmale des ersten Anspruchs gelöst. Vorteilhafte Aus- und Weiterbildungen und ein vorteilhaftes Verfahren zur Versorgung eines Verbrauchers mit Wasserstoff sind Inhalt der abhängigen Ansprüche.

Nach der Erfindung ist ein Reaktor zur Freisetzung von Wasserstoff aus einer Wasserstoff tragenden, flüssigen Verbindung, mit einem Reaktorgefäß, das wenigstens einen Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung enthält, dadurch gekennzeichnet, dass der Körper mit metallischer Trägerstruktur wenigstens eine Ausnehmung besitzt, deren Volumen, bezogen auf das Reaktorgefäß und die geodätische Höhe, von unten nach oben zunimmt. Eine solche, nach oben sich vergrößernde Ausnehmung ist vorteilhaft für den Betrieb des Reaktors, insbesondere für die Abführung des Wasserstoffs vom Katalysatorkörper, also von den katalytisch wirksamen Oberflächen des Körpers mit metallischer Trägerstruktur, vor allem, wenn eine vertikale Betriebsposition des Reaktors gewählt ist. Der Wasserstoff kann aufgrund des Auftriebs zügig nach oben entweichen und es steht der Auftriebskraft, aufgrund der Ausnehmung im Körper mit metallischer Trägerstruktur, weniger Strömungswiderstand entgegen, was das Entweichen des Wasserstoffs aus dem Reaktor und damit den Prozess der Wasserstofffreisetzung beschleunigt, sowie die Kontaktfläche zwischen dem Katalysator und der flüssigen wasserstofftragenden Verbindung vergrößert. Die Ausnehmungen im Körper mit metallischer Trägerstruktur können so abgestimmt werden, dass deren Volumenzunahme nach oben im Wesentlichen dem zunehmenden Volumen des abzuführenden Wasserstoffs entspricht oder sich proportional zu diesem vergrößert.

Bei bevorzugten Ausführungen der Erfindung ist die Ausnehmung im Körper mit metallischer Trägerstruktur kegelförmig oder kegelstumpfförmig gestaltet, mit einer nach unten gerichteten Spitze des Kegels. Alternativ dazu kann die Ausnehmung aber auch zylinderförmig gestaltet sein, wobei der Zylinderumfang von unten nach oben stufenartig zunimmt. Wenn das Reaktorgefäß eine Längsachse besitzt, die lotrecht von unten nach oben verläuft, ist es sehr vorteilhaft, wenn die Längsachse des Reaktorgefäßes deckungsgleich ist mit der Längsachse der Ausnehmung. So können der Körper mit metallischer Trägerstruktur und dessen Ausnehmung symmetrisch zu deren Längsachse gestaltet und produziert werden.

Nach einer vorteilhaften Ausführungsform der Erfindung ist das Reaktorgefäß ein Rohrbündel aus parallel geschalteten Rohren, dessen einzelne, auf Abstand voneinander gehaltene Rohre jeweils wenigstens einen Körper mit einer Ausnehmung enthalten, der von der Wasserstoff tragenden Verbindung im jeweiligen Rohr umströmt wird, wobei ein Wärmetauschvorgang zwischen dem Rohrbündel und dessen Umgebung, dieses auf Reaktionstemperatur bringt, indem dessen äußere Oberfläche durch ein Heizmedium, in einem für das Heizmedium dichten Gehäuse, mit mindestens einer Zu-, einer Ablauföffnung und einem Zulaufsammelraum für das Heizmedium, beaufschlagt wird.

Die Wasserstofffreisetzungseinheit kann aufgrund des Rohrbündels so vorteilhafterweise weitere Funktionen übernehmen, zum Beispiel bei der Phasentrennung und der Wärmezufuhr. So kann die gesamte Vorrichtung mit mehreren integrierten Funktionen in einem Bauteil realisiert werden. Noch vorteilhafter für den Betrieb des Reaktors ist es, insbesondere für die Abführung des Wasserstoffs vom Katalysatorkörper, wenn die Betriebsposition des Reaktors so gewählt ist, dass die Rohre des Rohrbündels vertikal verlaufen. Der Wasserstoff kann so aufgrund des Auftriebs zügig in der Ausnehmung nach oben entweichen, was die Wärmeübertragung im Rohrbündel und damit den Prozess der Wasserstofffreisetzung beschleunigt und über das Heizmedium besser steuerbar macht.

Bei besonders vorteilhaften Ausführungen der Erfindung ist der Reaktor dadurch gekennzeichnet, dass die Rohre des Rohrbündels durch Wärmeübertragungslamellen verbunden sind. Wenn diese dann für das Heizmedium undurchlässig sind und die Rohre des Rohrbündels durch die Wärmeübertragungslamellen hindurchstoßen, kann das Heizmedium über die dann, insbesondere horizontal verlaufenden, Wärmeübertragungslamellen besonders effektiv Wärmeenergie auf die Rohre des Rohrbündels übertragen. Dabei stabilisieren die Wärmeübertragungslamellen das Rohrbündel mechanisch, was bei hohen Temperaturen letztlich Gewichtseinsparungen beim Reaktor ermöglicht, die wiederum eine effektive Wärmeübertragung auf die Wasserstoff tragende Verbindung bedeuten.

Weiter vorteilhaft ist es, wenn eine Leiteinrichtung für das Heizmedium vorgesehen ist, die dieses im Gehäuse im Bereich des Rohbündels in seiner Strömungsrichtung so umlenkt, dass die Rohre des Rohrbündels vom Strom des Heizmediums jeweils auf einem Teil ihrer Länge mit jeweils unterschiedlicher Strömungsrichtung beaufschlagt werden. Auf diese Weise wird die Menge des notwendigen Heizmediums wesentlich verringert, bei verbessertem Wärmeaustausch, da das Heizmedium das Rohrbündel mehrmals durchströmt und so länger im Reaktor wärmeabgebend verbleibt. Konstruktiv besonders vorteilhaft ist, wenn die Leiteinrichtung bestimmte Wärmeübertragungslamellen außerhalb des Rohrbündels stromrichtungsumkehrend verbindet. Dies kann zum Beispiel durch Rohrhälften, die mehrere Wärmeübertragungslamellen überbrückend, mit ihren beiden Schnittkanten in Axialrichtung an jeweils einer Längskante einer Wärmeübertragungslamelle angebracht sind. Werden zwei Rohrhälften, jeweils eine auf gegenüberliegenden Seiten des Rohrbündes in vertikaler Richtung, insbesondere um ihren Radius, versetzt an den Wärmeübertragungslamellen angebracht, wird die Strömung des Heizmediums zweimal in ihrer Richtung verändert, dieses wird dreimal zum Wärmetausch durch das Rohrbündel geleitet und das Heizmedium kann in den Reaktor auf einer Seite einströmen und diesen auf der gegenüberliegenden Seite verlassen, was einen konstruktiv einfachen Aufbau des und wenig Strömungsverluste im Reaktor mit sich bringt. Vor allem, wenn das Heizmedium ein Heißgas ist.

Mit einem so aufgebauten Reaktor kann vorteilhafterweise mit einem guten Wirkungsgrad aus der Wasserstoff tragenden Verbindung, mittels katalytischer Dehydrierung bei hoher Temperatur und niedrigem Druck, Wasserstoff freigesetzt werden, der in den Rohren, nach oben steigend, durch die sich nach oben vergrößernde Ausnehmung abgeführt wird, insbesondere zusammen mit der inzwischen im Reaktor dehydrierten flüssigen Verbindung, zur nachfolgenden Trennung.

Ein vorteilhaftes Verfahren zur mindestens anteiligen Versorgung eines in einem Brennraum Kraftstoff verbrennenden Verbrauchers mit Wasserstoff, insbesondere einer Brennkraftmaschine oder Brennstoffzelle eines Kraftfahrzeugs oder eines stationären Verbrauchers, mittels des Reaktors kann dann dadurch gekennzeichnet sein, dass der Reaktor aus einem ersten Speichertank für eine Wasserstoff tragende Verbindung über eine Zulaufleitung mit dieser versorgt wird und die bei hoher Temperatur und niedrigem Druck dehydrierte Verbindung dann über eine Ablaufleitung von dem Reaktor in einen zweiten Speichertank abgeleitet wird, wobei der Reaktor einen Brennraum des Verbrauchers über eine Verbindungsleitung mit Wasserstoff versorgt.

Das hier zur Anwendung kommende Konzept der "Energietragenden Stoffe" besitzt den Vorteil, dass es unserer bisherigen Energieversorgung durch fossile Energieträger, insbesondere Rohöl, technisch nahe steht und daher die vorhandene Infrastruktur, wie Schiffe, Raffinerien, Tankstellen, genutzt werden kann. Insbesondere können über "Energietragende Stoffe" Energieüberschüsse aus regenerativer Produktion gespeichert und mit dem Energiebedarf für Mobilität, elektrische Einrichtungen, Beheizung und Transport in der heutigen Infrastruktur verknüpft werden. Chemische Energiespeicher haben noch folgende Vorteile: Eine nahezu unbegrenzte, verlustfreie Speicherfähigkeit, eine hohe Energiedichte und geringe Kosten. Solche energietragenden Stoffe sind geeignet als Langzeitspeicher und Transportform von Energie.

Ein bevorzugtes Ausführungsbeispiel der Erfindung ist in der nachfolgenden Beschreibung und der zugehörigen Zeichnung näher dargestellt. Es zeigen:
- Figur 1:: eine räumliche, in Längsrichtung aufgeschnittene Darstellung eines erfindungsgemäßen Reaktors und
- Figur 2:: eine vergrößerte Darstellung eines Rohrbündels des Reaktors aus Figur 1 mit Wärmeübertragungslamellen und Leiteinrichtung und
- Figur 3:: eine vergrößerte Darstellung eines Rohrs des Rohrbündels des Reaktors aus Figur 1, im Schnitt, mit Kennzeichnung einer stufenförmigen Ausnehmung.

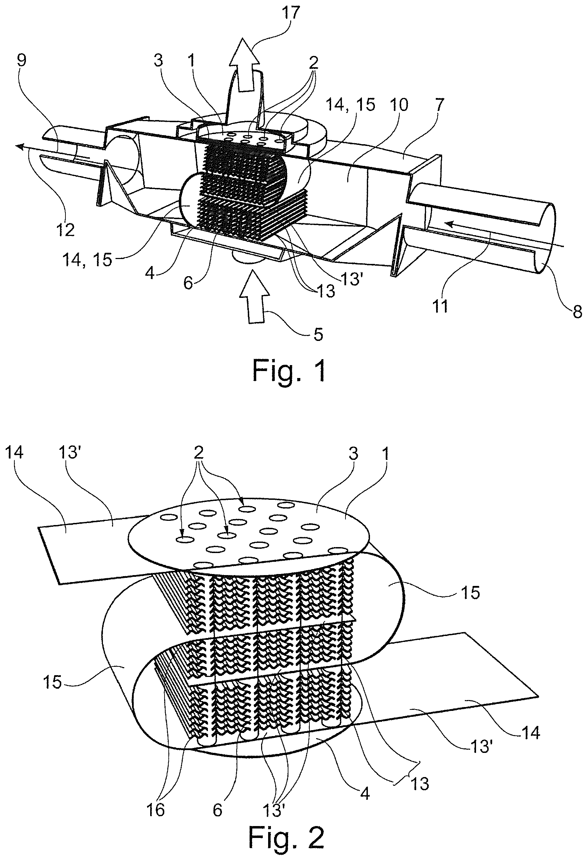

Figur 1 zeigt einen Reaktor zur Freisetzung von Wasserstoff aus einer Wasserstoff tragenden, flüssigen Verbindung, mit einem Reaktorgefäß 1, das als katalytische Reaktionssysteme nicht gezeichnete Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung enthält. Das Reaktorgefäß 1 ist ein Rohrbündel 6 aus parallel geschalteten Rohren 2, dessen einzelne, durch zwei Befestigungsplatten 3, 4 auf Abstand voneinander gehaltene Rohre 2 jeweils wenigstens einen Körper mit metallischer Trägerstruktur enthalten, der von der Wasserstoff tragenden, flüssigen Verbindung, symbolisch durch einen Strömungsrichtungspfeil 5 dargestellt, im jeweiligen Rohr 2 umströmt wird, wobei ein Wärmetauschvorgang zwischen dem Rohrbündel 6 und dessen Umgebung, die Wasserstoff tragende Verbindung 5 und den Körper mit metallischer Trägerstruktur in den Rohren 2 auf Reaktionstemperatur bringt, indem die äußere Oberfläche des Rohrbündels 6 durch ein Heizmedium, in einem für das Heizmedium dichten Gehäuse 7, mit mindestens einer Zu- 8, einer Ablauföffnung 9 und einem Zulaufsammelraum 10 für das Heizmedium, beaufschlagt wird. Das Heizmedium ist hier Heizgas und symbolisch dargestellt durch einen Strömungsrichtungspfeil 11 am Heißgaseintritt, der Zulauföffnung 8 und einen Strömungsrichtungspfeil 12 am Heißgasaustritt, der Ablauföffnung 9. Der Reaktor ist in Betriebsposition gezeichnet, in der die Rohre 2 des Rohrbündels 6 vertikal verlaufen. Der Wasserstoff kann so aufgrund des Auftriebs zügig mit der dehydrierten flüssigen Verbindung nach oben entweichen, symbolisch durch einen Strömungsrichtungspfeil 17 dargestellt, was die Wärmeübertragung im Rohrbündel 6 und damit den Prozess der Wasserstofffreisetzung beschleunigt und über das Heizmedium besser steuerbar macht.

Die Rohre 2 des Rohrbündels 6 sind durch Wärmeübertragungslamellen 13 verbunden. Diese sind für das Heizmedium undurchlässig und werden durch die Rohre 2 des Rohrbündels 6 durchstoßen. Dadurch kann das Heizmedium über die insbesondere horizontal verlaufenden, Wärmeübertragungslamellen 13 besonders effektiv Wärmeenergie auf die Rohre 2 des Rohrbündels 6 übertragen. Außerdem stabilisieren die Wärmeübertragungslamellen 13 das Rohrbündel 6 mechanisch, was bei hohen Temperaturen letztlich Gewichtseinsparungen beim Reaktor ermöglicht, die wiederum eine effektive Wärmeübertragung auf die Wasserstoff tragende Verbindung bedeuten.

Außerdem ist eine Leiteinrichtung 14 für das Heizmedium vorgesehen, die dieses im Gehäuse 7 im Bereich des Rohbündels 6 in seiner Strömungsrichtung so umlenkt, dass die Rohre 2 des Rohrbündels 6 vom Strom des Heizmediums 11 jeweils auf einem Teil ihrer Länge mit jeweils unterschiedlicher Strömungsrichtung beaufschlagt werden. So wird die Menge des notwendigen Heizmediums wesentlich verringert, bei verbessertem Wärmeaustausch, da das Heizmedium das Rohrbündel 6 mehrmals durchströmt und so länger im Reaktor wärmeabgebend verbleibt.

Die Leiteinrichtung 14 verbindet bestimmte Wärmeübertragungslamellen 13' außerhalb des Rohrbündels 6 stromrichtungsumkehrend durch Rohrhälften 15, die mehrere Wärmeübertragungslamellen überbrückend, mit ihren beiden Schnittkanten 16 in Axialrichtung an jeweils einer Längskante einer Wärmeübertragungslamelle 13' angebracht sind. Hier werden zwei Rohrhälften 15, jeweils eine auf gegenüberliegenden Seiten des Rohrbündes 6 in vertikaler Richtung um ihren Radius versetzt an den Wärmeübertragungslamellen 13' angebracht. Dadurch wird die Strömung 11 des Heizgases zweimal in ihrer Richtung verändert, dieses wird dreimal zum Wärmetausch durch das Rohrbündel 6 geleitet und das Heizgas verlässt dann den Reaktor auf der der Einströmseite (Pfeil 11) gegenüberliegenden Seite (Pfeil 12) .

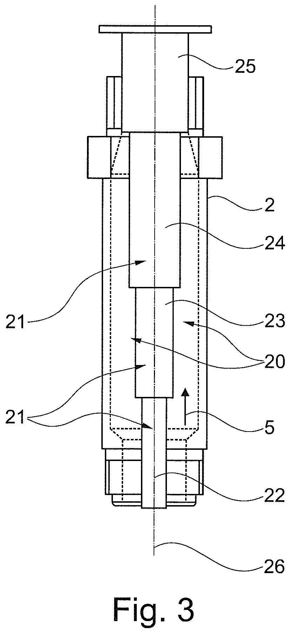

Figur 3 zeigt ein Rohr 2 des Rohrbündels 6 des Reaktors 1 in vertikaler Anordnung zur Freisetzung von Wasserstoff aus der Wasserstoff tragenden, flüssigen Verbindung, symbolisch durch den Strömungsrichtungspfeil 5 dargestellt. Im gestrichelt gezeichneten Hohlraum des Rohrs 2 befindet sich der nicht gezeichnete, poröse Körper mit metallischer Trängerstruktur, beschichtet mit den katalytisch wirkenden Substanzen für die Freisetzung von Wasserstoff aus der flüssigen, Wasserstoff tragenden Verbindung 5. Dieser Körper, auch bezeichnet als Katalysatorstruktur 20, hergestellt zum Beispiel im so genannten Rapid-Prototyping Verfahren, füllt den gestrichelt gezeichneten Hohlraum des Rohrs 2 im Wesentlichen aus, bis auf die Ausnehmung 21, die in die Katalysatorstruktur 20 eingearbeitet ist. Diese Ausnehmung 21 bildet einen Gaskanal, dessen Volumen, bezogen auf das Reaktorgefäß 1 bzw. Rohr 2, von unten nach oben zunimmt. Dazu ist die Ausnehmung 21 zum Beispiel zylinderförmig und der Zylinderumfang nimmt von unten nach oben stufenartig zu. Gezeichnet sind vier zentrisch in die Katalysatorstruktur 20 als Gaskanal bzw. Ausnehmung 21 entlang einer lotrecht von unten nach oben verlaufenden Längsachse 26 des Rohrs 2 eingearbeitete Zylinder 22, 23 ,24, 25, wobei die Längsachse 26 des Rohrs 2 deckungsgleich ist mit der Längsachse der Ausnehmung 21 und die Betriebsposition des Reaktors so gewählt ist, dass die Rohre 2 des Rohrbündels 6 und damit die Ausnehmungen 21 vertikal verlaufen.

Die eingebrachte Ausnehmung 21 bildet einen Gaskanal und verbessert damit die Gas-/Flüssig-Phasen-Trennung des Wasserstoffs von der den Wasserstoff tragenden, flüssigen Verbindung, symbolisch durch den Strömungsrichtungspfeil 5 dargestellt. Aufgrund des freien Volumens im Rohr 2 kann das Gas schneller in den freien Raum entweichen und das Reaktionsvolumen, die beschichtete Katalysatorstruktur 20 verlassen. Es entsteht ein Sog, der einen schnelleren Austrag der Gasphase sowie eine schnellere Trennung von Flüssig- und Gas-Phase bewirkt, da das Gas den Weg des geringsten Widerstandes sucht. Die flüssige Phase 5 verbleibt länger in dem Reaktionsvolumen. Dies erhöht die Effizienz der katalytisch aktiven Fläche, da die Kontaktzeit der flüssigen Phase 5 mit dem Katalysator 20 verlängert wird. Dies ermöglicht eine Reduktion des Bauraums des Reaktors und eine Verringerung des Edelmetalleinsatzes bei der Katalysatorstruktur 20.

## Patentansprüche

1. Reaktor zur Freisetzung von Wasserstoff aus einer Wasserstoff tragenden, flüssigen Verbindung (5), mit einem Reaktorgefäß (1), das wenigstens einen Körper mit metallischer Trägerstruktur enthält, auf die eine feste, hochporöse Beschichtung aufgebracht ist, die katalytisch wirkende Substanzen für die Freisetzung von Wasserstoff aus der flüssigen, Wasserstoff tragenden Verbindung (5) enthält, **dadurch gekennzeichnet, dass** der Körper mit metallischer Trägerstruktur wenigstens eine Ausnehmung (21) besitzt, die, bezogen auf das Reaktorgefäß (1), von unten nach oben in ihren Querschnittsausmaßen gleich bleibt oder größer wird.

2. Reaktor nach Anspruch 1, **dadurch gekennzeichnet, dass** die Ausnehmung kegelförmig oder kegelstumpfförmig ist, mit einer nach unten gerichteten Spitze des Kegels.

3. Reaktor nach Anspruch 1, **dadurch gekennzeichnet, dass** die Ausnehmung zylinderförmig ist, wobei der Zylinderumfang von unten nach oben gleich bleibt oder stufenartig zunimmt.

4. Reaktor nach einem der Ansprüche 1 bis 3, **dadurch gekennzeichnet, dass** das Reaktorgefäß (1) eine Längsachse besitzt, die lotrecht von unten nach oben verläuft.

5. Reaktor nach einem der Ansprüche 1 bis 4, **dadurch gekennzeichnet, dass** die Längsachse des Reaktorgefäßes (1) deckungsgleich ist mit der Längsachse der Ausnehmung.

6. Reaktor nach einem der Ansprüche 1 bis 5, **dadurch gekennzeichnet, dass** das Reaktorgefäß (1) ein Rohrbündel (6) aus parallel geschalteten Rohren (2) ist, dessen einzelne, auf Abstand voneinander gehaltene Rohre (2) jeweils wenigstens einen Körper mit einer Ausnehmung enthalten, der von der Wasserstoff tragenden Verbindung (5) im jeweiligen Rohr (2) umströmt wird, wobei ein Wärmetauschvorgang zwischen dem Rohrbündel (6) und dessen Umgebung, dieses auf Reaktionstemperatur bringt, indem dessen äußere Oberfläche durch ein Heizmedium (11, 12), in einem für das Heizmedium (11, 12) dichten Gehäuse (7), mit mindestens einer Zu- (8), einer Ablauföffnung (9) und einem Zulaufsammelraum (10) für das Heizmedium (11, 12), beaufschlagt wird.

7. Reaktor nach Anspruch 6 , **dadurch gekennzeichnet, dass** dessen Betriebsposition so gewählt ist, dass die Rohre (2) des Rohrbündels (6) vertikal verlaufen.

8. Reaktor nach Anspruch 6 oder 7, **dadurch gekennzeichnet, dass** die Rohre (2) des Rohrbündels (6) durch Wärmeübertragungslamellen (13, 13') verbunden sind.

9. Reaktor nach Anspruch 8, **dadurch gekennzeichnet, dass** die Wärmeübertragungslamellen (13, 13') für das Heizmedium (11, 12) undurchlässig sind und die Rohre (2) des Rohrbündels (6) durch diese hindurchstoßen.

10. Reaktor nach einem der Ansprüche 6 bis 9, **dadurch gekennzeichnet, dass** eine Leiteinrichtung (14) für das Heizmedium (11, 12) vorgesehen ist, die dieses im Gehäuse (7) im Bereich des Rohbündels (6) in seiner Strömungsrichtung so umlenkt, dass die Rohre (2) des Rohrbündels (6) vom Strom des Heizmediums (11, 12) jeweils auf einem Teil ihrer Länge mit jeweils unterschiedlicher Strömungsrichtung beaufschlagt werden.

11. Reaktor nach Anspruch 10, **dadurch gekennzeichnet, dass** die Leiteinrichtung (14) bestimmte Wärmeübertragungslamellen (13') außerhalb des Rohrbündels (6) stromrichtungsumkehrend verbindet.

12. Reaktor nach einem der Ansprüche 6 bis 11, **dadurch gekennzeichnet, dass** das Heizmedium (11, 12) Heißgas ist.

13. Reaktor nach einem der Ansprüche 6 bis 12, **dadurch gekennzeichnet, dass** in diesem, aus der Wasserstoff tragenden Verbindung (5), mittels katalytischer Dehydrierung unter Druck und bei hoher Temperatur, Wasserstoff freigesetzt wird, der in den Rohren (2) nach oben steigend abgeführt wird.

14. Verfahren zur mindestens anteiligen Versorgung eines Verbrauchers mit Wasserstoff, für eine Verwendung in einer Energiewandlungsmaschine, insbesondere in einer Verbrennungskraftmaschine oder Brennstoffzelle, mittels eines Reaktors nach einem der Ansprüche 1 bis 13, **dadurch gekennzeichnet, dass** der Reaktor aus einem ersten Speichertank für eine Wasserstoff tragende Verbindung über eine Zulaufleitung mit dieser versorgt wird und die bei hoher Temperatur und niedrigem Druck dehydrierte Verbindung über eine Ablaufleitung von dem Reaktor in einen zweiten Speichertank abgeleitet wird, wobei der Reaktor einen Brennraum des Verbrauchers über eine Verbindungsleitung mit Wasserstoff versorgt.

## Claims

1. A reactor for release of hydrogen from a hydrogen-bearing liquid compound (5), said reactor having a reactor vessel (1) comprising at least one body with metallic support structure, to which a solid, highly porous coating is applied, which coating contains catalytically active substances for the release of hydrogen from the liquid, hydrogen-bearing compound (5), **characterised in that** the body with metallic support structure has at least one recess (21), of which the cross-sectional dimensions, based on the reactor vessel (1), remain the same or become larger from bottom to top.

2. A reactor according to claim 1, **characterised in that** the recess is conical or frustoconical, with the tip of the cone directed downwardly.

3. A reactor according to claim 1, **characterised in that** the recess is cylindrical, wherein the cylinder circumference remains the same or increases in a step-like manner from bottom to top.

4. A reactor according to any one of claims 1 to 3, **characterised in that** the reactor vessel (1) has a longitudinal axis, which runs perpendicularly from bottom to top.

5. A reactor according to any one of claims 1 to **4, characterised in that** the longitudinal axis of the reactor vessel (1) is congruent with the longitudinal axis of the recess.

6. A reactor according to any one of claims 1 to 5, **characterised in that** the reactor vessel (1) is a tube bundle (6) formed of tubes (2) connected in parallel, the individual tubes (2) of said tube bundle being held at a distance from one another and each containing at least one body with a recess, around which body the hydrogen-bearing compound (5) flows in a corresponding tube (2), wherein a heat exchange process between the tube bundle (6) and the surroundings thereof brings the tube bundle to reaction temperature **in that** the outer surface of the tube bundle is acted on by a heating medium (11, 12), in a housing (7) which contains the heating medium (11, 12) in a sealed manner and which has at least one feed opening (8), one discharge opening (9), and one feed collection chamber (10) for the heating medium (11, 12).

7. A reactor according to claim 6, **characterised in that** the operating position thereof is selected so that the tubes (2) of the tube bundle (6) run vertically.

8. A reactor according to claim 6 or 7, **characterised in that** the tubes (2) of the tube bundle (6) are connected by heat transfer lamellae (13, 13').

9. A reactor according to claim 8, **characterised in that** the heat transfer lamellae (13, 13') are impermeable to the heating medium (11, 12) and the tubes (2) of the tube bundle (6) penetrate through these lamellae.

10. A reactor according to any one of claims 6 to 9, **characterised in that** a guide means (14) for the heating medium (11, 12) is provided and diverts the heating medium in its flow direction in the housing (7) in the region of the tube bundle (6) such that the tubes (2) of the tube bundle (6) are each acted on over part of their length by the flow of the heating medium (11, 12), with a different flow direction in each case.

11. A reactor according to claim 10, **characterised in that** the guide means (14) connects specific heat transfer lamellae (13') outside the tube bundle (6) in a manner reversing the flow direction.

12. A reactor according to any one of claims 6 to 11, **characterised in that** the heating medium (11, 12) is hot gas.

13. A reactor according to any one of claims 6 to 12, **characterised in that** hydrogen is released in the reactor from the hydrogen-bearing compound (5) by means of catalytic dehydrogenation under pressure and at high temperature and is carried off in the tubes (2) in an upwardly ascending direction.

14. A method for supplying a consumer at least proportionally with hydrogen, for use in an energy conversion machine, more especially in an internal combustion engine or fuel cell, by means of a reactor according to any one of claims 1 to 13, **characterised in that** the reactor is supplied with a hydrogen-bearing compound from a first storage tank for said compound via a feed line, and the compound dehydrogenated at high temperature and low pressure is led off from the reactor into a second storage tank via a discharge line, wherein the reactor supplies hydrogen to a combustion chamber of the consumer via a connection line.

## Revendications

1. Réacteur permettant de libérer de l'hydrogène à partir d'une composition liquide (5) porteuse d'hydrogène comprenant une cuve de réacteur (1) renfermant au moins un corps ayant une structure support métallique sur lequel est appliqué un revêtement solide fortement poreux renfermant des substances catalytiquement actives pour permettre la libération d'hydrogène à partir de la composition liquide porteuse d'hydrogène (5),
**caractérisé en ce que**
le corps ayant une structure support métallique comporte au moins un évidement (21) dont la section reste égale ou augmente du bas vers le haut par rapport à la cuve de réacteur (1).

2. Réacteur conforme à la revendication 1,
**caractérisé en ce que**
l'évidement de la forme d'un cône ou d'un tronc de cône dont la pointe est dirigée vers le bas.

3. Réacteur conforme à la revendication 1,
**caractérisé en ce que**
l'évidement est de forme cylindrique, la périphérie de ce cylindre restant égale ou augmentant par gradins du bas vers le haut.

4. Réacteur conforme à l'une des revendications 1 à 3,
**caractérisé en ce que**
la cuve de réacteur (1) a un axe longitudinal qui s'étend verticalement du bas vers le haut.

5. Réacteur conforme à l'une des revendications 1 à 4,
**caractérisé en ce que**
l'axe longitudinal de la cuve de réacteur (1) coïncide avec l'axe longitudinal de l'évidement.

6. Réacteur conforme à l'une des revendications 1 à 5,
**caractérisé en ce que**
la cuve de réacteur (1) est constituée par un faisceau de tubes (6) parallèle (2) dont les tubes (2) maintenus à distance les uns des autres renfermant chacun au moins un corps ayant un évidement dans lequel circule la composition porteuse d'hydrogène (5), dans chacun des tubes (2), un processus d'échange de chaleur entre le faisceau de tubes (6) et son environnement permettant de l'amener à la température de réaction du fait que sa surface externe est alimentée par un fluide chaud (11, 12) circulant dans un boîtier (7) étanche à ce fluide chaud (11, 12) ayant au moins une ouverture d'entrée (8) et une ouverture de sortie (9) et une chambre collectrice (10) du fluide chaud (11, 12).

7. Réacteur conforme à la revendication 8,
**caractérisé en ce que**
sa position de fonctionnement est choisie de sorte que les tubes (2) du faisceau de tubes (6) s'étendent verticalement.

8. Réacteur conforme à la revendication 6 ou 7,
**caractérisé en ce que**
les tubes (2) du faisceau de tubes (6) sont reliés par des lamelles de transfert de chaleur (13, 13').

9. Réacteur conforme à la revendication 8,
**caractérisé en ce que**
les lamelles de transfert de chaleur (13, 13') sont imperméables au fluide chaud (11, 12) et les tubes (2) du faisceau de tubes (6) s'étendent au travers de celles-ci.

10. Réacteur conforme à l'une des revendications 6 à 9,
**caractérisé en ce qu'**
il est prévu un dispositif de guidage (14) du fluide chaud (11, 12) qui le dévie dans le boîtier (7), dans la zone du faisceau de tubes (6) dans sa direction de circulation de sorte que les tubes (2) du faisceau de tubes (6) soient respectivement sollicités par le flux de fluide chaud (11, 12) sur une partie de leur longueur avec une direction de circulation respectivement différente.

11. Réacteur conforme à la revendication 10,
**caractérisé en ce que**
le dispositif de guidage (14) relie des lamelles de transfert de chaleur déterminées (131) à l'extérieur du faisceau de tube (6) en inversant la direction de circulation.

12. Réacteur conforme à l'une des revendications 6 à 11,
**caractérisé en ce que**
le fluide chaud (11, 12) est un gaz chaud.

13. Réacteur conforme à l'une des revendications 6 à 12,
**caractérisé en ce qu'**
il permet de libérer, à partir de la composition porteuse d'hydrogène (5), par déshydrogénation catalytique sous pression et à haute température de l'hydrogène qui est extrait en s'échappant vers le haut dans les tubes (2).

14. Procédé permettant d'alimenter au moins partiellement un consommateur en hydrogène, destiné à être utilisé dans une machine de transfert d'énergie, en particulier un moteur à combustion interne ou une cellule à combustible au moyen d'un réacteur conforme à l'une quelconque des revendications 1 à 13,
**caractérisé en ce que**
le réacteur est alimenté en une composition porteuse d'hydrogène à partir d'un premier réservoir renfermant cette composition par une conduite d'entrée, et la composition déshydrogénée à haute température et sous basse pression est évacuée du réacteur par une conduite de sortie vers un second réservoir de stockage,
le réacteur alimentant en hydrogène une chambre de combustion du consommateur par l'intermédiaire d'une conduite de liaison.
